# EUROPEAN PATENT SPECIFICATION

(11) **EP 0 384 066 B1**
(45) Date of publication and mention of the grant of the patent: **13.04.1994**
(21) Application number: 89310029.7
(22) Date of filing: 02.10.1989
(51) Int. Cl.: A01B 3/421

(54) **Turnover mechanism for agricultural implements**
Drehvorrichtung für landwirtschaftliche Werkzeuge
Mécanisme pour outil agricole réversible

(43) Date of publication of application: 29.08.1990
(73) Proprietor: DOWDESWELL ENGINEERING CO. LTD., Stockton Nr. Rugby Warwickshire (GB)
(72) Inventor: Barrett, Eric James, Stockton Nr. Rugby Warwickshire (GB)
(74) Representative: Hallam, Arnold Vincent

(56) References cited:
- EP-A- 0 044 876
- CH-A- 506 931
- FR-A- 2 526 262
- GB-A- 2 168 881
- US-A- 4 067 396

## Description

This invention relates to a turnover mechanism for an agricultural implement such as a reversible plough.

A reversible plough has a plough frame which is generally rotatably mounted on a support which is in turn arranged to be attached to the rear of a tractor. Known turnover mechanisms are complex, having a large number of component parts, as a result of which the dimensions of the turnover mechanism are quite large which in turn affects control of the plough during ploughing.

GB-A-2 168 881 describes a reversing mechanism for semi-mounted ploughs, which includes single acting hydraulic reversing cylinders for effecting turning of a plough frame(s) about a carriage, and a lifting arm which at its one end is rotatably supported on a shaft of the carriage, and which at its other end is fastened to the frame to be reversed. The reversing cylinders which have approximately the same volume and stroke, have piston rods rotatably attached to pressure arms which are rotatable about the shaft. Each reversing cylinder is arranged to turn the lifting arm approximately 110 degrees from horizontal position before attaining its full length of stroke and the piston rod of the non-activated reversing cylinder is brought to abut against the abutment screw and brake the remainder of the reversing operation, which takes place with the aid of gravity. Two identical double-acting hydraulic steering cylinders are connected in parallel with the reversing cylinders and are arranged automatically to adjust, for example, the back wheel of a semi-reversible plough when the reversing mechanism is activated.

FR-A-2 526 262 describes a reversing mechanism for a reversible plough which has a support shaft connectable to a tractor and first and second linkages pivotally mounted on the support shaft for pivoting about a common turnover axis between first and second extreme positions, each linkage having a respective fluid pressure operated ram which is pivotally coupled to the support shaft by a link. A suitable mounting frame detachably mounts the linkages to the plough such that pivoting of the linkages from one of the extreme positions to the other reverses the implement. The links by which the pressure operated rams are pivotally coupled to the support shaft, are pivoted to the support shaft at respective laterally spaced apart pivot points so that extension of one of the rams during retraction of the other ram causes the linkage to pivot to any pre-selectable position between and including the two extreme positions. In this mechanism movement of the plough is controlled by both cylinders acting through the links only for about 10° from the vertical and the links are not in tension except for short periods of the turnover cycle.

The present invention seeks to provide an improved turnover mechanism for a reversible agricultural implement.

Accordingly, the present invention provides a reversing mechanism for a reversible agricultural implement such as a reversible plough, comprising:
support means connectable to a tractor;
first and second linkage means pivotally mounted on said support means for pivoting about a common turnover axis between first and second extreme positions, each said linkage means having a respective fluid pressure operated ram pivotally coupled to said support means by a link;
and mounting means for detachably mounting said linkage means to said implement such that pivoting of said linkage means from one of said positions to the other reverses said implement;
the links being pivoted to the support means at respective laterally spaced apart pivots;
characterised in that means are provided for moving said linkage means from said first to said second extreme position by controlled contraction of one of the rams accompanied by controlled extension of the other of said rams throughout the entire range of movement between said first and second extreme positions; and in that, throughout said entire range of movement, each said link is continuously under tension.

A prefered form of the invention is characterised in that the two rams are pivoted together at a single common pivotal axis at their ends remote from the links;
in that each link is pivoted to its respective ram at a ram pivot point;
and in that the shorter one of said rams is aligned with its associated link to define a triangle with the longer one of said rams and its associated link.

The turnover mechanism according to the invention has the advantage that its dimensions can be kept to a minimum, enabling the plough to be attached relatively close to the towing tractor thus improving control of the plough during ploughing.

The present invention is further described hereinafter, by way of example, with reference to the accompanying drawings, in which:
- Figures 1 and 2: are plan views of a preferred form of the turnover mechanism and adjacent plough frame structure in respective operative positions,
- Figures 3 and 4: are rear elevational views of Figures 1 and 2 respectively, and
- Figure 5: is a rear elevational view showing the mechanism in the mid position.

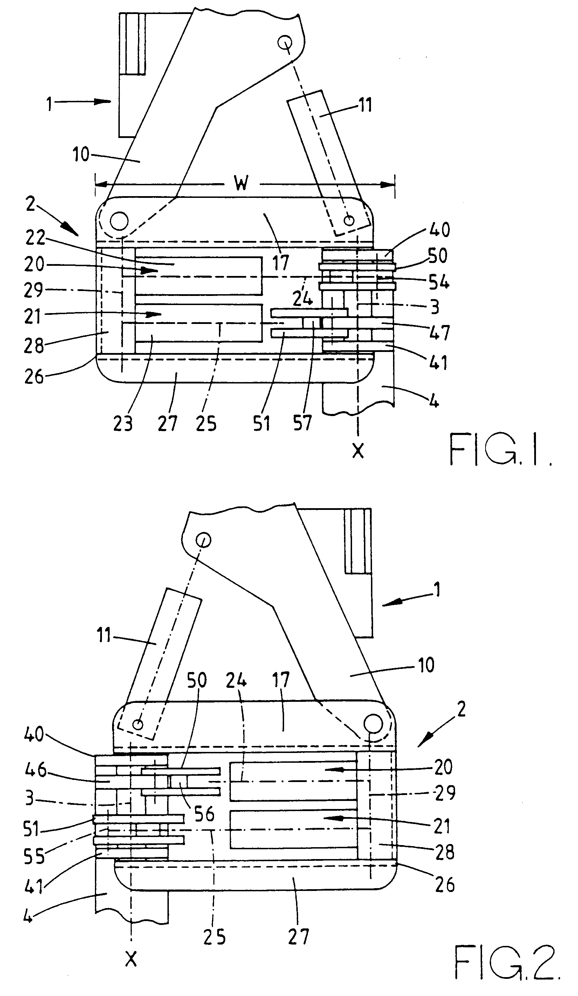

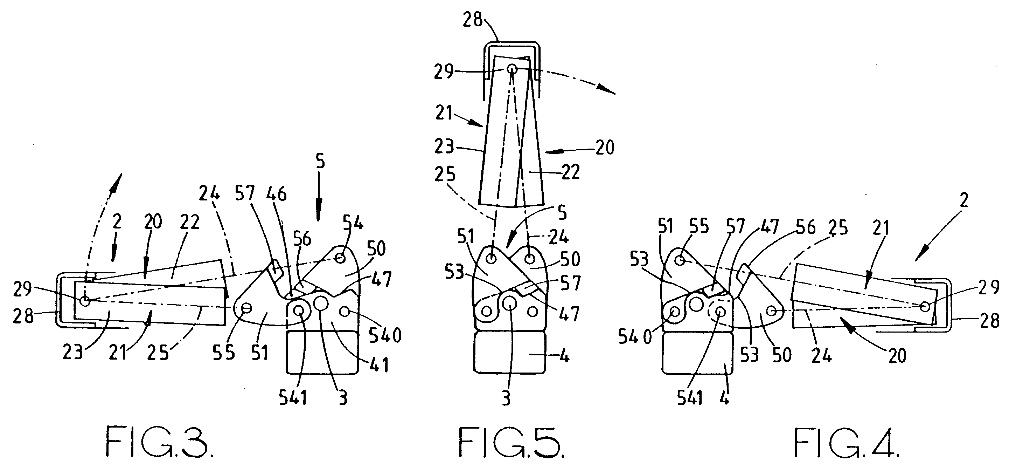

Referring to the drawings, a plough frame 1 has a beam whose adjacent forward part is indicated at 10 in Figures 1 and 2 together with a beam angle adjustment ram 11.

A turnover mechanism for the plough has a ram assembly 2 which comprises a pair of parallel single acting hydraulic rams 20, 21 carried by a frame 26 and acting on linkage 5 associated with the turnover axis X. For the purpose of turnover operation the ram frame 26 is secured to or forms part of the forward end of the plough frame 1 for turnover movement therewith. The ram frame is of L-form providing a cross member 27 united by a side piece 28 to the forward cross member 17 of the plough frame 1. The cross members 17, 27 are pivotally mounted about the turnover axis X or pivot shaft 3. The shaft 3 is journalled in bearing brackets 40, 41 carried by a support or draft member 4 mounted from the rear of a tractor which draws the plough.

The side piece 28 is of channel section and carries the cylinders 22, 23 of the rams 20, 21 on a pivotal axis at 29. The axis is parallel with the turnover axis X. The piston rods 24, 25 of the rams 20, 21 are pivotally connected at 54, 55 to corresponding links 50, 51 of the linkage 5. The links are pivotally mounted at 540, 541 on respectively bearing brackets 40, 41, the pivots 540, 541 of the links 50, 51 being arranged one at each side of the turnover axis X and adjacent thereto but in a different or lower plane.

Each link 50, 51 is shown of generally triangular form (see Figures 3 to 5) with respective ram piston rods 24, 25 pivotally connected to the apex of the link 50, 51 at 54, 55. A lower corner portion of the link 50, 51 is pivoted at 540, 541 on the associated bearing bracket 40, 41 on the support member 4.

The underside edge of each link 50, 51 is recessed at 53 to accommodate with clearance the turnover pivot shaft 3 whilst the other lower corner portion of each link is formed with a foot 56, 57 for locating abutment with a cooperating seating 46, 47 on the associated bearing bracket 40 or 41.

To effect turnover operation of the plough frame 1 and of the ram frame 2 through substantially 180° from the position shown in Figures 1 and 3 to that shown in Figures 2 and 4, the extended ram 20 is operated for retraction so that it pulls on the firmly seated upstanding link 50 raising the plough frame 1 to the mid position indicated in Figure 5. Some extension of the ram 21 simultaneously takes place together with the return of its associated link 51 to the seated position so that both links 50, 51 are seated in the mid position of the plough frame 1 (Figure 5).

Continued retraction of the ram 20 and extension of the ram 21 effects turnover movement of the plough frame 1 to the position shown in Figures 2 and 4. The retraction of the ram 20 during this second part of the turnover movement causes the associated link to swing back from its seated position to the final position shown in Figures 2 and 4. Such swing back action of the link 50 enables the ram 20 to pull down the plough frame 1 with an under centre action relative to the turnover axis X.

The link 51 remains in its seated position to effect full extension of the ram 21 and is therefore in position to enable the ram 21 to effect movement of the plough frame 1 in the opposite direction when the ram 21 is retracted and the reverse of the above described action occurs.

By hydraulically locking the rams 20, 21 in the mid position the seating of both links 50, 51 enables the plough frame 1 to be held in the mid position or in what is termed the "butterfly" array of the plough bodies (not shown) for transport purposes, e.g. from one ploughing locality to another.

During turnover operation, the upstanding seated position of the appropriate link 50 or 51 enables each ram 20 or 21 to have effective leverage, on retraction, to raise the plough frame 1 and with an over centre action in relation to the turnover axis X at the pivot shaft 3. Such leverage can be adjusted by varying one or more of the effective dimensions of the links 50, 51 e.g. by the use of interchangeable links.

The swing back action of the links 50, 51 permits full retraction of one ram 20 or 21 while the other is fully extended and which also enables the width W (see Figure 1) of the leading end of the plough frame 1 (including the frame 26 of the turnover mechanism) to be kept to a minimum.

Whereas a positive turnover action can be obtained by the use of single acting rams 20, 21, if desired double acting rams can be employed further to ensure a positive action.

## Claims

1. A reversing mechanism for a reversible agricultural implement such as a reversible plough, comprising:
support means (4) connectable to a tractor;
first and second linkage means (20, 21) pivotally mounted on said support means for pivoting about a common turnover axis (X) between first and second extreme positions, each said linkage means having a respective fluid pressure operated ram (22, 23) pivotally coupled to said support means by a link (50, 51);
and mounting means (26) for detachably mounting said linkage means (20, 21) to said implement such that pivoting of said linkage means from one of said positions to the other reverses said implement;
the links (50,51) being pivoted to the support means (4) at respective laterally spaced apart pivots (540,541);
characterised in that means are provided for moving said linkage means from said first to said second extreme position by controlled contraction of one (22) of the rams (22,23) accompanied by controlled extension of the other (23) of said rams throughout the entire range of movement between said first and second extreme positions; and in that, throughout said entire range of movement, each said link (50,51) is continuously under tension.

2. A mechanism according to claim 1 further characterised in that the two rams (22,23) are pivoted together at a single common pivotal axis (29) at their ends remote from the links (50,51);
in that each link (50,51) is pivoted to its respective ram (22,23) at a ram pivot point (54,55);
and in that the retracted one of said rams is aligned with its associated link (29,55,541;29,54,540) to define a triangle with the extended one of said rams (29,54;29,55) and its associated link (54,540;55,541).

3. A mechanism according to claim 1 or claim 2 further characterised in that each link (50,51) has at least three sides, is pivoted adjacent respective ends of one of said sides to the associated ram (22,23) at the ram pivot (54,55) and to said support means (4) at the pivot (540,541) and further characterised in that a second side of a link (50,51) is provided with a stop (56,57) adapted to abut said support means (4) to stop further pivotal movement of the link associated with the extended ram, as the ram extends.

4. A mechanism according to claim 3 further characterised in that both stops (56,57) abut the support means (4) at a position of travel of the linkage means central between the first and second extreme positions.

5. A mechanism according to any one of claims 2 to 4 wherein the single common pivotal axis (29) moves arcuately about the turnover axis during movement of the turnover mechanism from the first to the second extreme position.

6. A mechanism according to any preceding claim wherein the turnover axis (X) is located between said pivot point (540,541) and above a plane containing said pivot points (540,541) at all positions of the linkage means.

7. A mechanism as claimed in any preceding claim wherein said mounting means (26) comprises a frame means supporting said linkage means (20,21) in substantially parallel arrangement.

8. A mechanism as claimed in any preceding claim wherein each said ram (22,23) is a single-acting hydraulic ram.

9. A mechanism as claimed in any of claims 1 to 7 wherein each said ram (22,23) is a double-acting hydraulic ram.

## Patentansprüche

1. Drehvorrichtung für ein landwirtschaftliches Wendegerät, beispielsweise einen Wendepflug, bestehend aus:
einem Gestellmittel (4), das mit einem Traktor verbunden werden kann;
einem ersten und zweiten Verbindungsmittel (20, 21), die gelenkig an dem Gestellmittel zur Drehung um eine gemeinsame Wendeachse (X) zwischen einer ersten und zweiten Extremposition befestigt sind, wobei jedes Verbindungsmittel einen entsprechenden, durch hydrostatischen Druck betätigten Stößel (22, 23) hat, der durch ein Glied (50, 51) gelenkig an das Gestellmittel gekoppelt ist,
und ein Montagemittel (26), um die Verbindungsmittel (20, 21) abnehmbar mit dem Gerät zu verbinden, so daß die Schwenkung der Verbindungsmittel aus einer der Positionen in die andere das Gerät umkehrt;
wobei die Glieder (50, 51) an entsprechenden, seitlich voneinander getrennten Drehpunkten (540, 541) drehgelenkig an dem Gestellmittel (4) angeordnet sind;
gekennzeichnet dadurch, daß Mittel vorgesehen sind, um die Verbindungsmittel aus der ersten in die zweite Extremposition durch das gesteuerte Zurückziehen des einen (22) der Stößel (22, 23), begleitet durch das gesteuerte Ausfahren des anderen (23) der Stößel über den gesamten Bewegungsbereich zwischen der ersten und der zweiten Extremposition zu bewegen, und daß über den gesamten Bewegungsbereich jedes der Glieder (50, 51) ständig unter Spannung ist.

2. Vorrichtung nach Anspruch 1, außerdem gekennzeichnet dadurch, daß die beiden Stößel (22, 23) zusammen an einer einzigen gemeinsamen Drehzapfenachse (29) an den Enden, die von den Gliedern (50, 51) entfernt sind, drehgelenkig angeordnet sind;
daß jedes Glied (50, 51) an einem Stößeldrehzapfenpunkt (54, 55) an dem entsprechenden Stößel (22, 23) drehgelenkig angeordnet ist,
und daß der zurückgezogene der Stößel mit dem dazugehörigen Glied (29, 55, 541; 29, 54, 540) so ausgerichtet ist, daß er mit dem ausgefahrenen der Stößel (29, 54; 29, 55) und dessen dazugehörigem Glied (54, 540; 55, 541) ein Dreieck bildet.

3. Vorrichtung nach Anspruch 1 oder Anspruch 2, außerdem gekennzeichnet dadurch, daß jedes Glied (50, 51) wenigstens drei Seiten hat, an anliegenden entsprechenden Enden von einer der Seiten drehgelenkig verbunden ist mit dem dazugehörigen Stößel (22, 23) am Stößeldrehpunkt (54, 55) und mit dem Gestellmittel (4) am Drehzapfen (540, 541), und außerdem gekennzeichnet dadurch, daß eine zweite Seite eines Gliedes (50, 51) mit einem Anschlag (56, 57) versehen ist, der an das Gestellmittel (4) anstoßen kann, um die weitere Schwenkbewegung des Glieds, das dem ausgefahrenen Stößel zugeordnet ist, zu stoppen, wenn der Stößel ausgefahren wird.

4. Vorrichtung nach Anspruch 3, außerdem gekennzeichnet dadurch, daß beide Anschläge (56, 57) an das Gestellmittel (4) in einer Position der Bewegung des Verbindungsmittels in der Mitte zwischen der ersten und der zweiten Extremposition anstoßen.

5. Vorrichtung nach einem der Ansprüche 2 bis 4, bei welcher sich die einzige, gemeinsame Drehachse (29) während der Bewegung der Drehvorrichtung aus der ersten in die zweite Extremposition bogenförmig um die Wendeachse bewegt.

6. Vorrichtung nach einem der vorstehenden Ansprüche, bei welcher sich die Wendeachse (X) bei allen Positionen des Verbindungsmittels zwischen den Drehzapfen-Punkten (540, 541) und über einer Ebene, welche diese Drehzapfen-Punkte (540, 541) enthält, befindet.

7. Vorrichtung nach einem der vorstehenden Ansprüche, bei welcher das Montagemittel (26) ein Rahmenelement umfaßt, welches die Verbindungsmittel (20, 21) in einer im wesentlichen parallelen Anordnung trägt.

8. Vorrichtung nach einem der vorstehenden Ansprüche, bei welcher jeder der Stößel (22, 23) ein einfachwirkender hydraulischer Stößel ist.

9. Vorrichtung nach einem der Ansprüche 1 bis 7, bei welcher jeder der Stößel (22, 23) ein doppeltwirkender hydraulischer Stößel ist.

## Revendications

1. Mécanisme inverseur pour un outil agricole réversible tel qu'une charrue réversible, comprenant:
un moyen de support (4) apte à être relié à un tracteur;
des premier et second moyens d'attelage (20, 21) montés en pivotement sur ledit moyen de support pour pivoter autour d'un axe de retournement commun (X) entre des première et seconde positions extrêmes, chacun desdits moyens d'attelage comportant un piston respectif (22, 23) à commande hydraulique, couplé en pivotement audit moyen de support par une liaison (50, 51);
ainsi que des moyens de montage (26) pour monter de manière amovible lesdits moyens d'attelage (20, 21) sur ledit outil, de telle sorte que le pivotement desdits moyens d'attelage entre une desdites positions et l'autre, inverse ledit outil;
les liaisons (50, 51) étant montées en pivotement sur le moyen de support (4) sur des pivots respectifs (540, 541) latéralement espacés l'un de l'autre;
caractérisé en ce que des moyens sont prévus pour faire passer lesdits moyens d'attelage de ladite première à ladite seconde position extrême par contraction réglée d'un piston (22) des pistons (22, 23) accompagnée d'une extension réglée de l'autre piston (23) desdits pistons sur toute l'étendue de mouvement entre lesdites première et seconde positions extrêmes; et en ce que, sur toute ladite étendue de mouvement, chacune desdites liaisons (50, 51) se trouve continuellement sous tension.

2. Mécanisme selon la revendication 1, caractérisé en outre en ce que les deux pistons (22, 23) sont montés ensemble en pivotement sur un seul axe de pivotement commun (29) à leurs extrémités éloignées des liaisons (50, 51);
en ce que chaque liaison (50, 51) est montée en pivotement sur son piston respectif (22, 23) à un pivot de piston (54, 55);
et en ce que le piston rétracté desdits pistons se trouve en alignement avec sa liaison associée (29, 55, 541; 29, 54, 540) pour définir un triangle avec ledit piston étendu desdits pistons (29, 54; 29, 55) et sa liaison associée (54, 540; 55, 541).

3. Mécanisme selon la revendication 1 ou 2, caractérisé en outre en ce que chaque liaison (50, 51) comporte au moins trois côtés, est montée en pivotement en position adjacente aux extrémités respectives d'un desdits côtés au piston associé (22, 23) au pivot de piston (54, 55) et audit moyen de support (4) au pivot (540, 541) et, caractérisé en outre en ce qu'un second côté d'une liaison (50, 51) est munie d'un arrêt (56, 57) conçu pour venir buter contre ledit moyen de support (4) pour stopper le mouvement pivotant ultérieur de la liaison associée au piston étendu, à mesure où le piston s'étend.

4. Mécanisme selon la revendication 3, caractérisé en outre en ce que deux arrêts (56, 57) viennent buter contre le moyen de support (4) en position centrale de la trajectoire des moyens d'attelage, entre les première et seconde positions extrêmes.

5. Mécanisme selon l'une quelconque des revendications 2 à 4, dans lequel l'axe unique commun de pivotement (29) se déplace en formant un arc autour de l'axe de retournement au cours du mouvement du mécanisme de retournement entre la première et la seconde positions extrêmes.

6. Mécanisme selon l'une quelconque des revendications précédentes, dans lequel l'axe de retournement (X) est disposé entre ledit pivot (540, 541) et au-dessus d'un plan contenant lesdits pivots (540, 541) dans toutes les positions des moyens d'attelage.

7. Mécanisme selon l'une quelconque des revendications précédentes, dans lequel ledit moyen de montage (26) comprend un moyen de logement supportant lesdits moyens d'attelage (20, 21) en un arrangement essentiellement parallèle.

8. Mécanisme selon l'une quelconque des revendications précédentes, dans lequel chacun desdits pistons (22, 23) est un piston hydraulique à simple effet.

9. Mécanisme selon l'une quelconque des revendications 1 à 7, dans lequel chacun desdits pistons (22, 23) est un piston hydraulique à double effet.
